# EUROPÄISCHE PATENTSCHRIFT

(11) **EP 1 315 911 B1**
(45) Veröffentlichungstag und Bekanntmachung des Hinweises auf die Patenterteilung: **14.09.2005**
(21) Anmeldenummer: 01953842.0
(22) Anmeldetag: 09.07.2001
(51) Int. Cl.: F16C 11/02, F16C 11/04, F16C 17/10

(54) **DREHLAGER-EINLEGETEIL UND DAMIT AUFGEBAUTES LAGER**
PIVOT BEARING INSERT AND BEARING CONSTRUCTED WITH THE SAME
PIECE D'INSERTION POUR COUSSINET DE PIVOTEMENT ET PALIER COMPRENANT CETTE PIECE

(30) Priorität: 10.07.2000 DE 10033487
(43) Veröffentlichungstag der Anmeldung: 04.06.2003
(73) Patentinhaber: Janz, Joachim, 85134 Stammham (DE)
(72) Erfinder: Janz, Joachim, 85134 Stammham (DE)
(74) Vertreter: Helge, Reiner
(86) Internationale Anmeldenummer: PCT/DE2001/002458
(87) Internationale Veröffentlichungsnummer: WO 2002/004824

(56) Entgegenhaltungen:
- DE-A- 3 338 560
- DE-C- 3 606 813
- DE-C- 19 629 377
- US-A- 4 383 478

## Beschreibung

Die Erfindung betrifft ein Drehlager-Einlegeteil für einen Lagerkörper, der aus wenigstens zwei relativ zueinander um eine Drehachse drehbaren Lagerteilen besteht, zwischen denen das Drehlager-Einlegeteil angeordnet ist.

Die Erfindung betrifft ferner ein mit einem derartigen Drehlager-Einlegeteil ausgebildetes Lager.

Ein derartiges Drehlager-Einlegeteil und damit aufgebautes Lager sind aus der DE 196 29 377 C1 bekannt. Das Einlegeteil hat dabei die Form einer Haube, die mit einem Konus ausgebildet ist und einen die Lagerteile trennenden Randabschnitt aufweist. Das Einlegeteil ist dafür vorgesehen, in einer Gießform mit dem flüssigen Metall des Lagerkörpers umgossen zu werden. Vorgesehen ist dabei die feste Verbindung des Drehlager-Einlegeteils mit einem der Lagerteile durch Aufschrumpfen auf dieses Lagerteil, wodurch gleichzeitig ein Freischrumpfen von dem anderen Lagerteil erfolgt. In der Praxis muss dieses Freischrumpfen unmittelbar nach dem Gießprozess erfolgen. Dies bedeutet, dass die noch sehr heißen Lager in kalte Flüssigkeit getaucht werden müssen, um eine schockartige Temperaturabsenkung für das Freischrumpfen zu erhalten. Diese Schock-Abkühlung bewirkt eine Versprödung des Materials und ein Verziehen des Teils. Dies hat zur Folge dass anschließend aufwendige und kostenintensive Wärmebehandlungen durchgeführt werden müssen. Darüber hinaus wird das durch den Freischrumpfungsprozess entstandene nötige Spiel zwischen den beiden Lagerteilen bzw. zwischen dem Drehlager-Einlegeteil und dem relativ dazu bewegten Lagerteil nach relativ wenigen Lastwechseln dadurch vergrößert, dass das sich bewegende Lagerteil gegenüber dem Drehlager-Einlegeteil auf Abrieb belastet wird.

Der Erfindung liegt die Aufgabe zugrunde, ein Drehlager-Einlegeteil zu schaffen, das die Herstellung eines hochwertigen Lagers mit einer oder mehreren Lagerachsen ermöglicht, das preiswert und ohne aufwendige Wärmebehandlungen herstellbar ist und im Betrieb verringerte Abnutzungserscheinungen zeigt.

Zur Lösung dieser Aufgabe ist erfindungsgemäß ein Drehlager-Einlegeteil der eingangs erwähnten Art dadurch gekennzeichnet, dass es aus zwei ineinander gleitenden Lagerbuchsen besteht, die mit ineinander gleitenden Lagerflächen und zum jeweiligen Lagerteil zugewandten Außenseiten versehen sind, wobei die ineinander gleitenden Lagerflächen glatt und spielfrei ausgebildet sind, während die Außenseiten aufgerauht und mit dem jeweiligen Lagerteil fest verbindbar sind.

Die Lösung der Aufgabe gelingt ferner mit einem Lager mit einem Lagerkörper aus wenigstens zwei relativ zueinander um eine Drehachse drehbaren Lagerteilen und wenigstens einem Drehlager-Einlegeteil der vorgenannten Art.

Das erfindungsgemäß vorgesehene Drehlager-Einlegeteil besteht aus zwei zylindrischen Lagerbuchsen, die vor dem Herstellungsprozess des Lagerkörpers spielfrei zusammengefügt werden. Vorzugsweise gelingt dies dadurch, dass die beiden Lagerbuchsen mit ihren glatten Lagerflächen zueinanderzeigend gemeinsam verformt werden, beispielsweise durch Tiefziehen aus flächigen Ausgangsmaterialien. Das so gebildete Drehlager-Einlegeteil wird in einer Gießform mit dem Material des Lagerkörpers, also der relativ zueinander drehbaren Lagerteile, umgossen. Die beiden Lagerbuchsen gehen aufgrund Ihrer zu den Lagerteilen zeigenden aufgerauhten Außenseiten eine feste Verbindung mit den Lagerteilen ein. Nach dem Abkühlen wird die Haftreibung zwischen den Lagerbuchsen überwunden und es entstehen leichtgängige Lagerflächen, die einen leichtgängige Lagerbewegung ermöglichen.

In einer bevorzugten Ausführungsform des Drehlager-Einlegeteils weisen die ineinander gleitenden Lagerbuchsen an mindestens einem Ende einen senkrecht zur Drehachse stehenden umlaufenden Rand auf. Dabei können auch die Ränder aufeinander gleiten oder parallel mit Abstand zueinander angeordnet sein. Ferner ist es möglich, dass wenigstens eine, vorzugsweise aber beide der ineinander gleitenden Lagerbuchsen an beiden Enden einen umlaufenden Rand aufweisen.

Die Lagerflächen können grundsätzlich konisch verlaufen, sind aber vorzugsweise zylindrische Mantelflächen.

Die beiden ineinander gleitenden Lagerbuchsen können aus gleichem Material gebildet sein, weisen dann aber vorzugsweise unterschiedliche Oberflächenbehandlungen auf. Bevorzugt ist jedoch eine Ausbildung der ineinander gleitenden Lagerbuchsen aus verschiedenem Material, wobei vorzugsweise die äußere Lagerbuchse aus Edelstahl und die innere Lagerbuchse aus Kupfer, Messing oder Bronze besteht.

Die beiden ineinander gleitenden Lagerbuchsen können mit radial verlaufenden Abschnitten versehen und dann einstellbar axial gegeneinander drückbar sein. Dadurch wird die Leicht- bzw. Schwergängigkeit des Lagers einstellbar. Ausführungsformen hierzu sind unten anhand zeichnerischer Darstellungen näher erläutert.

Das mit einem erfindungsgemäßen Drehlager-Einlegeteil aufgebaute Lager kann demontierbar und wiedermontierbar ausgebildet sein. Hierzu kann beispielsweise eine innen liegende Lagerbuchse hutförmig ausgebildet sein und an ihrem geschlossenen Ende parallel zu diesem Ende eine umlaufende, nach innen geformte Nut aufweisen, in die eine Sicherungsscheibe zur Fixierung der außenliegenden Lagerbuchse einsetzbar ist. Das Lager kann dabei durch Abnehmen der Sicherungsscheibe leicht zerstörungsfrei demontiert werden.

Für die Herstellung einer Langzeitschmierung ist es zweckmäßig, in wenigstens eine der aneinander gleitenden Flächen der beiden Lagerbuchsen einen umlaufenden Raum zur Aufnahme einer Langzeitschmierung, beispielsweise in Form eines Schmierfettes, auszubilden.

Das erfindungsgemäße, mit wenigstens einem beschriebenen Drehlager-Einlegeteil versehene Lager ist vorzugsweise als ein Gießteil hergestellt, bei dem das Drehlager-Einlegeteil in den Lagerkörper eingegossen ist.

Dabei kann sich eins der Lagerteile durch die innere Lagerbuchse erstrecken und einen abschließenden, das Lager zusammenhaltenden Flansch bilden.

Das sich in die innere Lagerbuchse hinein bzw. durch die innere Lagerbuchse hindurch erstreckende Lagerteil bildet dann ein Achsenteil aus.

Das erfindungsgemäße Lager kann aber auch ein separates Achsenteil aufweisen, mit dem wenigstens zwei Drehlager-Einlegeteile verbunden sind. Diese Drehlager-Einlegeteile können vorzugsweise identische Drehlager-Einlegeteile sein, die mit Abstand zueinander entweder parallel verschoben oder aber spiegelsymmetrisch angeordnet werden können.

Die Erfindung soll im folgenden anhand von in der Zeichnung dargestellten Ausführungsbeispielen näher erläutert werden. Es zeigen:
- Figur 1:: eine schematische Darstellung einer Ausführungsform eines erfindungsgemäßen Lagers mit zwei erfindungsgemäßen Drehlager-Einlegeteilen in einer Schnittdarstellung,
- Figur 2:: eine Schnittdarstellung einer zweiten Ausführungsform eines erfindungsgemäßen Lagers, ausgebildet als Scharnier,
- Figur 3:: eine perspektivische Ansicht der Ausführungsform gemäß Figur 2,
- Figur 4:: ein drittes Ausführungsbeispiel eines erfindungsgemäßen Lagers,
- Figur 5:: eine vierte Ausführungsform eines erfindungsgemäßen Lagers, bei dem eine axiale Andruckkraft justierbar ist,
- Figur 6:: eine fünfte Ausführungsform eines erfindungsgemäßen Lagers, das demontierbar ist
- Figur 7:: eine sechste Ausführungsform eines erfindungsgemäßen Lagers,
- Figur 8:: eine siebte Ausführungsform eines erfindungsgemäßen Lagers mit einer Einstellmöglichkeit für die axiale Andruckkraft,
- Figur 9:: eine achte Ausführungsform eines erfindungsgemäßen Lagers,
- Figur 10:: eine neunte Ausführungsform eines erfindungsgemäßen Lagers,
- Figur 11a bis c:: Varianten der Anordnung zweier erfindugnsgemäßer Drehlager-Einlegeteile an einem Achsenteil
- Figur 12:: ein Anwendungsbeispiel für die Anordnungen gemäß Figur 11,
- Figur 13:: eine schematische Ansicht eines Vierfach-Lagers.

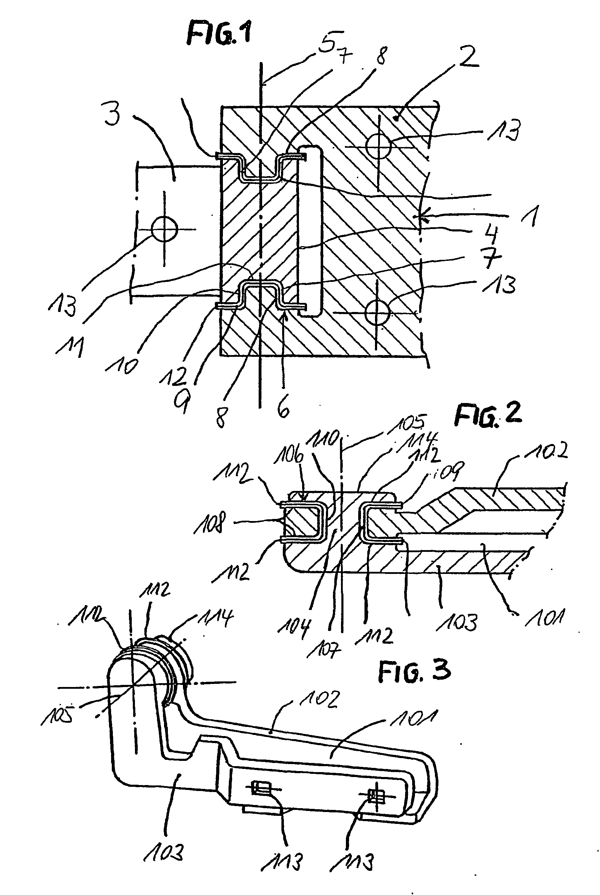

Das in Figur 1 dargestellte Lager weist einen Lagerkörper 1 mit einem ersten Lagerteil 2 und einem zweiten Lagerteil 3 auf. Das erste Lagerteil 2 ist ein lagerndes Lagerteil, während das zweite Lagerteil 3 ein über ein Achsenstück 4 gelagertes Lagerteil ist. Das Achsenstück 4 ist um eine Lagerachse 5 drehbar gelagert. Hierzu sind zwischen das erste Lagerteil 2 und das Achsenstück 4 des zweiten Lagerteils 3 zwei gemeinsam verformte, ein Drehlager-Einlegeteil 6 bildende Lagerhülsen 7, 8 eingefügt. Die Lagerhülsen 7, 8 sind hutförmig ausgebildet. Zwischen ihnen ist eine Lagerfläche 9 ausgebildet, auf der die beiden Lagerbuchsen gegeneinander gleiten.

Die Lagerbuchsen 7, 8 bilden einen zylindrischen Mantelkörper 10, der an einem Ende durch einen Zylinderboden 11 geschlossen ist und an seinem anderen Ende einen radial nach außen gerichteten umlaufenden Rand 12 aufweist, der etwas über die Kontur des ersten Lagerteils 2 bzw. des Achsenstücks 4 des zweiten Lagerteils 3 hinausragt. In dem in Figur 1 dargestellten Ausführungsbeispiel erstreckt sich die Lagerfläche 9 über die gesamte Kontur der Lagerbuchsen 7, 8, da diese identisch ausgebildet sind und über die gesamte Kontur aneinander gleitend anliegen, wenn das Achsenstück 4 des zweiten Lagerteils 3 relativ zum ersten Lagerteil 2 gedreht wird.

Der dargestellte Lagerkörper 1 wird in einem einzigen Gießvorgang hergestellt, indem die Drehlager-Einlegeteile 6 in die Gießform eingelegt und mit dem flüssigen Metall der Lagerteile 2, 3 umgossen werden. In diesem Gießvorgang werden in den Lagerteilen 2, 3 vorgesehene Öffnungen 13 mit eingeformt.

Bei dem in den Figuren 2 und 3 dargestellten zweiten Ausführungsbeispiel ist ein Lagerkörper 101 in Form eines Scharniers für eine Motorhaube, eine Heckklappe eines Pkw o.ä. ausgebildet. Ein erstes Lagerteil 102 und ein zweites Lagerteil 103 sind über ein Drehlager-Einlegeteil 106 miteinander verbunden, das aus zwei Lagerbuchsen 107, 108 besteht, die zwischen sich eine Lagerfläche 109 ausbilden. Die Lagerbuchsen 107, 108 bestehen aus einer zylindrischen Mantelfläche und radial gerichteten umlaufenden Rändern 112 an beiden axialen Enden der zylindrischen Mantelfläche 110.

Das zweite Lagerteil 103 tritt mit einem ein Achsenstück 104 bildenden Abschnitt durch die innere Lagerbuchse 107 hindurch und ist auf der anderen Seite mit einem Endflansch 114 abgeschlossen, dessen Durchmesser deutlich größer als der Innendurchmesser der inneren Lagerbuchse 107 ist, sodass eine nicht mehr demontierbare Verbindung zwischen den Lagerteilen 102, 103 besteht.

Figur 3 verdeutlicht, dass auch hier Öffnungen 113 beim Gießvorgang eingeformt sind. In diesem Ausführungsbeispiel ist die bezüglich der Drehachse 105 außen liegende Lagerbuchse 108 über die aufgerauhte Oberfläche fest mit dem ersten Lagerteil 102 und die bezüglich der Drehachse 105 innenliegende Lagerbuchse 107 fest mit dem zweiten Lagerteil 103 verbunden.

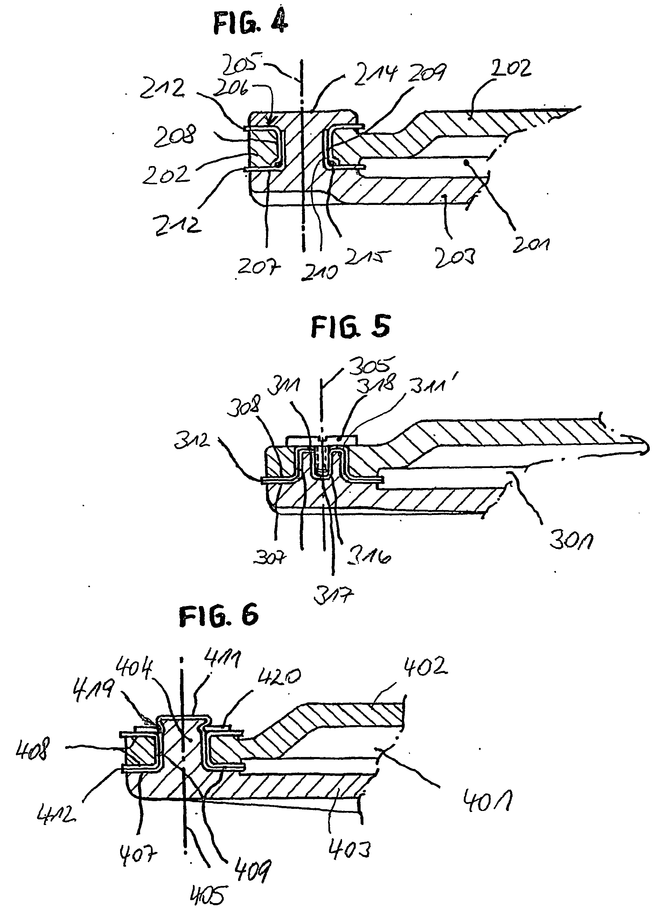

Das in Figur 4 dargestellte dritte Ausführungsbeispiel stellt ein ähnliches Lager wie beim zweiten Ausführungsbeispiel dar. Auch hier ist der Zusammenhalt zwischen den Lagerteilen 202 und 203 durch den innen durch das Drehlager-Einlegeteil 206 durchtretende zweite Lagerteil 203 gebildet, das den Endflansch 214 aufweist.

Das Drehlager-Einlegeteil besteht in diesem Fall aus einer bezüglich der Drehachse 205 inneren Lagerbuchse 207 und einer äußeren Lagerbuchse 208, die beide jeweils mit einer zylindrischen Mantelfläche 210 und einem radial stehenden, rechtwinklig zur Drehachse 205 stehenden umlaufenden Rand 212, also im Querschnitt etwa L-förmig ausgebildet sind. Die beiden Ränder 212 befinden sich jedoch an unterschiedlichen Enden, sodass sie gemeinsam einen ringförmigen Abschnitt des ersten Lagerteils 202 umfassen. Der zylindrische Abschnitt 210 der äußeren Lagerbuchse 208 ist am nicht mit dem Rand 212 versehenen Ende nach Art einer Sicke eingezogen und bildet somit einen Raum 215 für ein Schmierfett zur Realisierung einer Langzeitschmierung der Lagerfläche 209 zwischen den beiden Lagerbuchsen 207, 208.

Bei dem in Figur 5 dargestellten vierten Ausführungsbeispiel ist eine bezüglich der Drehachse 305 innere Lagerbuchse 307 im wesentlichen hutförmig ausgebildet, wobei jedoch ein Zylinderboden 311 der inneren Lagerbuchse 307 zentrisch zur Drehachse 305 einen zylindrischen Einzug 316 aufweist, der mit einem Innengewinde 317 versehen ist und somit eine Schraube 318 mit einem entsprechenden Außengewindebolzen aufnehmen kann. Der Zylinderboden 311' der äußeren Lagerbuchse 308 ist mit einer Durchgangsöffnung versehen, die den Durchtritt des Gewindebolzens der Schraube 318 erlaubt, sodass mittels der Schraube 318 ein axialer Anpressdruck zwischen den Lagerbuchsen 307, 308 einstellbar ist. Der Kopf der Schraube 318 dient ferner zum Zusammenhalten des Lagers.

Bei dem in Figur 6 dargestellten fünften Ausführungsbeispiel ist der Lagerkörper 401 wieder ähnlich ausgeführt wie bei den vorangegangenen Ausführungsbeispielen. Zur Gewährleistung einer Demontierbarkeit des Lagers ragt ein Achsenstück 404 des zweiten Lagerteils 403 in eine innere Lagerbuchse 407 hinein, die - ohne eine Durchmesservergrößerung - mit einem Zylinderboden 411 verschlossen ist. Die äußere Lagerbuchse 408 ist - wie in dem Ausführungsbeispiel der Figur 2 - mit umlaufenden Rändern 412 an beiden Enden ausgebildet. Das axial aus der äußeren Lagerbuchse 408 herausstehende Ende der inneren Lagerbuchse 407 ist parallel zu dem Zylinderboden 411 mit einer nach innen eingezogenen umlaufenden Nut 419 versehen, in die ein Sicherungsring 420 eingeschnappt ist, um das Lager zusammenzuhalten. Durch Entfernen des Sicherungsrings 420 ist das Lager ohne weiteres demontierbar.

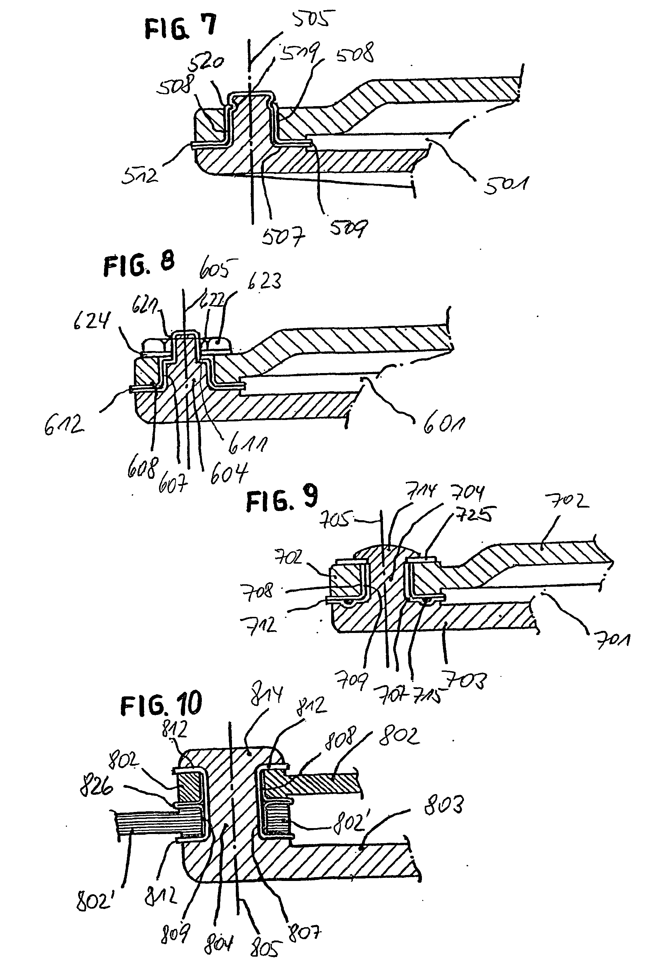

Bei dem in Figur 7 dargestellten sechsten Ausführungsbeispiel ist die innere Lagerbuchse 507 wie in Figur 6 ausgebildet. Die äußere Lagerbuchse 508 hingegen weist nur an einem Ende einen umlaufenden Rand 512 auf, während sie am anderen Ende mit einem radial nach innen weisenden ringförmigen Ansatz 520 versehen ist, der in die Nut 519 hineinragt. Dadurch ist das Lager in dieser Ausführungsform nicht mehr zerstörungsfrei demontierbar.

Bei der in Figur 8 dargestellten siebten Ausführungsform eines gleichen Lagerkörpers 601 ist die äußere Lagerbuchse 608 wie die äußere Lagerbuchse 308 in dem in Figur 5 dargestellten Ausführungsbeispiel ausgebildet. Die innere Lagerbuchse 607 hingegen weist eine auf den Zylinderboden 611 aufgesetzte erneute Hutform 621 auf, die an der zylindrischen Mantelfläche mit einem Außengewinde 622 versehen ist.

Dadurch ist auf diese Hutform 621 eine Schraubmutter 623 mit einer Unterlegscheibe 624 aufschraubbar, wodurch das Lager zusammengehalten wird und die beiden Lagerbuchsen 607, 608 axial gegeneinander zur Einstellung des Drehwiderstands drückbar sind. Das sich aus der Innenkontur der inneren Lagerbuchse 607 ergebende Achsenstück 604 ist stufenförmig zylindrisch ausgebildet.

Bei dem in Figur 9 dargestellten achten Ausführungsbeispiel ist das Material des zweiten Lagerteils 703 durch einen innere Lagerbuchse 707 hindurchgeflossen und bildet mit seinem Achsenstück 704 einen zur Drehachse 705 rotationssymmetrischen pilzförmigen Endflansch 714. Der Endflansch 714 ist durch eine ringförmige Scheibe 725 von dem Material des ersten Lagerteils 702 getrennt.

Die beiden Lagerbuchsen 707 und 708 sind L-förmig ausgebildet und liegen parallel zueinander. Demgemäß entsteht zwischen den beiden Lagerbuchsen 707, 708 eine L-förmige Lagerfläche 709.

Die innere Lagerbuchse 707 ist im Bereich des umlaufenden Randes 712 mit einer umlaufenden Nut zur Ausbildung eines abgeschlossenen Raumes 715 für die Aufnahme von Schmierfett zur Realisierung einer Dauerschmierung versehen.

Das in Figur 10 dargestellte neunte Ausführungsbeispiel verdeutlicht, dass ein zweites Lagerteil 803 auch an zwei ersten Lagerteilen 802, 802' gelagert sein kann, indem ein Achsstück 804 des zweiten Lagerteils 803 mit einer inneren Lagerbuchse 807 verbunden ist, während die beiden (ortsfesten) ersten Lagerteile 802, 802' mit einer äußeren Lagerbuchse 808 verbunden sind, die auf halber axialer Höhe einen radial durch Materialdopplung gebildeten umlaufenden Steg 826 aufweist.

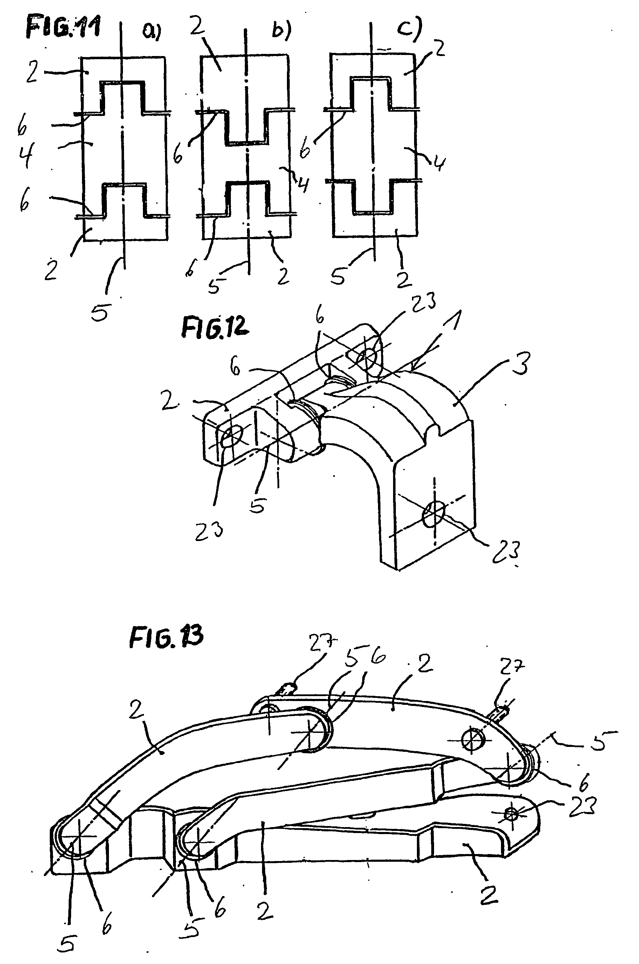

Figur 11 verdeutlicht schematisch die Möglichkeiten einer Anordnung zweier Drehlager-Einlegeteile 6 zwischen einem Achsenstück 4 und einem ersten Lagerteil 2, um eine Drehung um eine Drehachse 5 zu realisieren.

Gemäß Figur 11a sind die beiden Drehlager-Einlegeteile 6 auf der Drehachse parallel verschoben.

Gemäß Figur 11b sind die beiden Drehlager-Einlegeteile 6 hutförmig ausgebildet und mit ihren geschlossenen Enden aufeinander gerichtet.

Gemäß Figur 11c sind die geschlossenen Enden der beiden Drehlager-Einlegeteile 6 voneinander weggerichtet.

Figur 12 verdeutlicht eine Anwendung des ersten Ausführungsbeispiels für ein Autoscharnier. Der Lagerkörper 1 besteht aus einem lagernden ersten Lagerteil 2 und einem gelagerten zweiten Lagerteil 3. Das gelagerte Lagerteil 3 ist um eine Drehachse 5 relativ zum ersten Lagerteil 2 drehbar. Hierzu sind die Drehlager-Einlegeteile 6 vorgesehen. Die Ansicht verdeutlicht die Befestigungsöffnungen 23, die beim Gießvorgang mit eingeformt werden.

Figur 13 verdeutlicht einen komplexen Lagerkörper mit vier Drehachsen 5 und beweglichen Lagerteilen 2.

Erkennbar sind auch die im Gießvorgang hergestellten Öffnungen 23, für die Befestigungsschrauben 27 eingezeichnet sind. Das komplette Lager mit den Drehlager-Einlegeteilen 6, den Befestigungsschrauben 27 und den Befestigungslöchern 23 ist in einem Schuss fertig, spielfrei, drehbar und mit Selbstschmierung herstellbar.

## Patentansprüche

1. Drehlager-Einlegeteil für einen Lagerkörper (1, 101, 201, 301, 401, 501, 601, 701, 801), der aus wenigstens zwei relativ zueinander, um eine Drehachse (5, 105... 805) drehbaren Lagerteilen (2, 3; 102, 103; ...; 802, 803) besteht, zwischen denen das Drehlager-Einlegeteil (6, 106... 806) angeordnet ist, **dadurch gekennzeichnet, dass** es aus zwei ineinander gleitenden Lagerbuchsen (7, 8; 107, 108; ... 807, 808) besteht, die mit ineinander gleitenden Lagerflächen (9, 109... 809) und zum jeweiligen Lagerteil (2, 3; 102, 103; ..., 802, 803) zugewandten Außenseiten versehen sind, wobei die ineinander gleitenden Lagerflächen (9, 109... 809) glatt und spielfrei ausgebildet sind, während die Außenseiten aufgerauht und mit dem jeweiligen Lagerteil (2, 3; 102, 103; ..., 802, 803) fest verbindbar sind.

2. Drehlager-Einlegeteil nach Anspruch1, **dadurch gekennzeichnet, dass** die ineinander gleitenden Lagerbuchsen (7, 8; 107, 108; ... 807, 808) an mindestens einem Ende einen senkrecht zur Drehachse (5, 105 ... 805) stehenden umlaufenden Rand (12, 112 ... 812) aufweisen.

3. Drehlager-Einlegeteil nach Anspruch 1 oder 2, **dadurch gekennzeichnet, dass** wenigstens eine der Lagerbuchsen (7, 8; 107, 108; ... 807, 808) durch eine verschlossene Stirnseite eine Hutform aufweist.

4. Drehlager-Einlegeteil nach einem der Ansprüche 1 bis 3, **dadurch gekennzeichnet, dass** die Lagerflächen (9, 109... 809) zylindrische Mantelflächen sind.

5. Drehlager-Einlegeteil nach einem der Ansprüche 1 bis 4, **dadurch gekennzeichnet, dass** die beiden ineinander gleitenden Lagerbuchsen (7, 8, 107, 108; ... 807, 808) aus verschiedenem Material bestehen.

6. Drehlager-Einlegeteil nach einem der Ansprüche 2 bis 5, **dadurch gekennzeichnet, dass** die ineinander gleitenden Lagerbuchsen (7, 8, 107, 108; ... 807, 808) parallel zueinander umlaufende Ränder (12, 112 ... 812) aufweisen, die ebenfalls aneinander gleiten.

7. Drehlager-Einlegeteil nach einem der Ansprüche 1 bis 6, **dadurch gekennzeichnet, dass** die beiden ineinander gleitenden Lagerbuchsen (307, 308; 607, 608) radial verlaufende Abschnitte aufweisen und einstellbar axial gegeneinander drückbar sind.

8. Drehlager-Einlegeteil nach einem der Ansprüche 1 bis 8, **dadurch gekennzeichnet, dass** eine innenliegende Lagerbuchse (407, 507) hutförmig ausgebildet ist und an ihrem geschlossenen Ende parallel zu diesem Ende eine umlaufende, nach innen geformte Nut (419, 519) aufweist, in die ein Sicherungsring (420, 520) zur Fixierung der außenliegenden Lagerbuchse (408, 508) einsetzbar ist.

9. Drehlager-Einlegeteil nach einem der Ansprüche 2 bis 8, **dadurch gekennzeichnet, dass** beide ineinander gleitende Lagerbuchsen (207, 208, 707, 708) an einem Ende einen umlaufenden Rand (212, 712) aufweisen, sodass beide Ränder (212, 712) parallel zueinander verlaufen.

10. Drehlager-Einlegeteil nach einem der Ansprüche 1 bis 9, **dadurch gekennzeichnet, dass** in wenigstens einer der aneinandergleitenden Flächen (209, 709) der beiden Lagerbuchsen (207, 208; 707, 708) ein umlaufender Raum (215, 715) zur Aufnahme einer Langzeitschmierung ausgebildet ist.

11. Lager mit einem Lagerkörper (1, 101, 201, 301, 401, 501, 601, 701, 801) aus wenigstens zwei relativ zueinander um eine Drehachse (5, 105 ... 805) drehbaren Lagerteilen (2, 3, 102, 103; ..., 802, 803) und mit einem zwischen den drehbaren Lagerteilen angeordneten Drehlager-Einlegeteil (6, 106... 806) nach einem der Anprüche 1 bis 10.

12. Lager nach Anspruch 11, bei dem das Drehlager-Einlegeteil (6 106... 806) in den Lagerkörper (1, 101, 201, 301, 401, 501, 601, 701, 801) eingegossen ist.

13. Lager nach Anspruch 11 oder 12, bei dem ein Lagerteil (103, 203, 403, 503, 603, 703, 803) sich durch die innere Lagerbuchse (107, 207, 307 407, 507, 607, 707, 807) erstreckt und einen abschließenden Flansch (114, 214, 420, 623, 714, 814) bildet.

14. Lager nach einem der Ansprüche 11 bis 13, bei dem eines der Lagerteile (3, 103...803) ein Achsenteil (4, 104... 804) ausbildet.

15. Lager nach einem der Ansprüche 11 bis 14, bei dem wenigstens zwei Drehlager-Einlegeteile (6) mit einem Achsenteil (4) des Lagers verbunden sind.

16. Lager nach einem der Ansprüche 11 bis 15, **dadurch gekennzeichnet, dass** es demontierbar und wiedermontierbar ausgebildet ist.

## Claims

1. Pivot bearing insert for a bearing body (1, 101, 201, 301, 401, 501, 601, 701, 801) that consists of at least two bearing parts (2, 3; 102, 103; ... 802, 803) that are positioned relative to each other and can be pivoted around an axis of rotation (5. 105 ... 805), and between which the pivot bearing insert (6, 106 ... 806) is arranged, **characterised in that** it consists of two bearing bushes that slide into each other (7, 8; 107, 108; ... 807, 808) and that have bearing surfaces (9, 109 ... 809) that slide into each other und outer sides that face towards the relevant bearing part (2, 3; 102, 103; ... 802, 803), whereby all bearing surfaces that slide into each other (9, 109, ... 809) are smooth und free from play, whilst the outsides are roughened and can be fixed tight with the relevant bearing part (2, 3; 102, 103; ... 802, 803).

2. Pivot bearing insert according to claim 1, **characterised in that** the bearing bushes that slide into each other (7, 8; 107, 108; ... 807, 808) have on at least one end a circular rim (12, 112, ... 812) that is positioned vertically to the axis of rotation (5, 105 ... 805).

3. Pivot bearing insert according to claim 1 or 2, **characterised in that** at least one of the bearing bushes (7, 8: 107, 108; ... 807, 808) displays the shape of a hat by means of a closed front edge.

4. Pivot bearing insert as claimed in any one of claims 1 to 3, **characterised in that** the bearing faces (9, 109, ... 809) are cylindrical surface areas.

5. Pivot bearing insert as claimed in any one of claims 1 to 4, **characterised in that** the two bearing bushes that slide into each other (7,8; 107, 108; ... 807, 808) are made of different materials.

6. Pivot bearing insert as claimed in any one of claims 2 to 5, **characterised in that** the bearing bushes that slide into each other (7, 8; 107, 108; ... 807, 808) have parallel circular rims (12, 112, ... 812) that also slide up to each other.

7. Pivot bearing insert as claimed in any one of claims 1 to 6, **characterised in that** the two bearing bushes that slide into each other (307, 308; 607, 608) have radial sections and they can be axially adjusted and pressed against each other.

8. Pivot bearing insert as claimed in any one of claims 1 to 6, **characterised in that** an internal bearing bush (407, 507) is of the shape of a hat and has at its closed end, parallel to that end, a circular groove (419, 519) that is shaped inwards, into which a locking ring (420, 520) can be inserted in order to fix the external bearing bush (408, 508).

9. Pivot bearing insert as claimed in any one of claims 2 to 8, **characterised in that** both bearing bushes that slide into each other (207, 208, 707, 708) have at one end a circular rim (212, 712), so that both rims (212, 712) run parallel to each other.

10. Pivot bearing insert as claimed in any one of claims 1 to 9, **characterised in that** at least in one of the surfaces that slide up to each other (209, 709) of the two bearing bushes (207, 208; 707, 708) a circular space (215, 715) is formed for housing long-term lubrication.

11. Bearing with a bearing body (1, 101, 201, 301, 401, 501, 601, 701, 801) that consists of at least two pivoted bearing parts (2, 3; 102, 103; ... 802, 803) that are positioned relative to each other around an axis of rotation (5, 105 ... 805) and a pivot bearing insert (6, 106 ... 806) that is positioned between the pivoted bearing parts, as claimed in any one of claims 1 to 10.

12. Bearing according to claim 11, where the pivot bearing insert (6, 106, ... 806) is cast integrally in the bearing body (1, 101, 201, 301, 401, 501, 601, 701, 801).

13. Bearing according to claim 11 or 12, where one bearing part (103, 203, 403, 503, 603, 703, 803) runs through the internal bearing bush (107, 207, 307, 407, 507, 607, 707, 807) and forms a terminal flange (114, 214, 420, 623, 714, 814).

14. Bearing according to any one of claims 11 to 13, where one of the bearing parts (3, 103, ... 803) forms an axle part (4, 104, ... 804).

15. Bearing as claimed in any one of claims 11 to 14, where at least two pivot bearing inserts (6) are connected with an axle part (4) of the bearing.

16. Bearing as claimed in any one of claims 11 to 15, **characterised in that** it can be repeatedly detached and reattached.

## Revendications

1. Insert pour palier tournant pour un corps de palier (1, 101, 201, 301, 401, 501, 601, 701, 801), lequel se compose d'au moins deux parties de palier (2, 3 ; 102, 103 ; ... 802, 803) pouvant tourner l'une par rapport à l'autre autour d'un axe de rotation (5. 105 ... 805) et entre lesquelles est disposé l'insert pour palier tournant (6, 106 ... 806), **caractérisé en ce qu'**il se compose de deux douilles de palier (7, 8 ; 107, 108; ... 807, 808) coulissant l'une dans l'autre et qui sont munies de surfaces d'appui (9, 109 ... 809) coulissant l'une dans l'autre et de côtés extérieurs dirigés vers la partie de palier correspondante (2, 3; 102, 103 ; ... 802, 803), les surfaces d'appui (9, 109, ... 809) coulissant l'une dans l'autre étant lisses et dépourvues de jeu alors que les côtés extérieurs étant rugueux et pouvant être reliés à demeure avec la partie de palier correspondante (2, 3 ; 102, 103 ; ... 802, 803).

2. Insert pour palier tournant selon la revendication 1, **caractérisé en ce que** les douilles de palier (7, 8 ; 107, 108 ; ... 807, 808) coulissant l'une dans l'autre présente à au moins une extrémité un bord périphérique (12, 112, ... 812) perpendiculaire à l'axe de rotation (5, 105 ... 805).

3. Insert pour palier tournant selon la revendication 1 ou 2, **caractérisé en ce qu'**au moins l'une des douilles de palier (7, 8; 107, 108; ... 807, 808) présente une forme de chapeau par un côté frontal fermé.

4. Insert pour palier tournant selon l'une des revendications 1 à 3, **caractérisé en ce que** les surfaces d'appui (9, 109, ... 809) sont des surfaces d'enveloppe cylindriques.

5. Insert pour palier tournant selon l'une des revendications 1 à 4, **caractérisé en ce que** les deux douilles de palier (7, 8 ; 107, 108 ; ... 807, 808) coulissant l'une dans l'autre se composent de matériaux différents.

6. Insert pour palier tournant selon l'une des revendications 2 à 5, **caractérisé en ce que** les douilles de palier (7, 8 ; 107, 108 ; ... 807, 808) coulissant l'une dans l'autre présentent des bords périphériques (12, 112, ... 812) parallèles l'un à l'autre qui coulissent eux aussi l'un contre l'autre.

7. Insert pour palier tournant selon l'une des revendications 1 à 6, **caractérisé en ce que** les deux douilles de palier (307, 308 ; 607, 608) coulissant l'une dans l'autre présentent des sections qui s'étendent dans le sens radial et sont réglables en les poussant l'une vers l'autre dans le sens axial.

8. Insert pour palier tournant selon l'une des revendications 1 à 6, **caractérisé en ce qu'**une douille de palier intérieure (407, 507) est réalisée en forme de chapeau et présente à son extrémité fermée, parallèlement avec cette extrémité, une rainure (419, 519) façonnée vers l'intérieur dans laquelle peut être introduit un circlip (420, 520) pour bloquer la douille de palier extérieure (408, 508).

9. Insert pour palier tournant selon l'une des revendications 2 à 8, **caractérisé en ce que** les deux douilles de palier (207, 208, 707, 708) coulissant l'une dans l'autre présentent à une extrémité un bord périphérique (212, 712) de manière à ce que les deux bords (212, 712) s'étendent parallèlement l'un à l'autre.

10. Insert pour palier tournant selon l'une des revendications 1 à 9, **caractérisé en ce qu'**un espace périphérique (215, 715) destiné à recevoir une lubrification à long terme est formé dans au moins l'une des surfaces (209, 709) reposant l'une contre l'autre des deux douilles de palier (207, 208 ; 707, 708).

11. Palier comprenant un corps de palier (1, 101, 201, 301, 401, 501, 601, 701, 801) composé d'au moins deux parties de palier (2, 3 ; 102, 103; ... 802, 803) pouvant tourner l'une par rapport à l'autre autour d'une axe de rotation (5, 105 ... 805) et comprenant un insert pour palier tournant (6, 106 ... 806) selon l'une des revendications 1 à 10 disposé entre les parties de palier rotatives.

12. Palier selon la revendication 11, avec lequel l'insert pour palier tournant (6, 106, ... 806) est moulé dans le corps de palier (1, 101, 201, 301, 401, 501, 601, 701, 801).

13. Palier selon la revendication 11 ou 12, avec lequel une partie de palier (103, 203, 403, 503, 603, 703, 803) s'étend à travers la douille de palier intérieure (107, 207, 307, 407, 507, 607, 707, 807) et forme une bride de terminaison (114, 214, 420, 623, 714, 814).

14. Palier selon l'une des revendications 11 à 13, avec lequel l'une des parties de palier (3, 103, ... 803) forme une partie d'axe (4, 104, ... 804).

15. Palier selon l'une des revendications 11 à 14, avec lequel au moins deux inserts pour palier tournant (6) sont reliés avec une partie d'axe (4) du palier.

16. Palier selon l'une des revendications 11 à 15, **caractérisé en ce qu'**il est configuré de manière à être démontable et remontable.
